(19) Europäisches Patentamt / European Patent Office / Office européen des brevets

(11) **EP 2 106 157 B1**

(12) **EUROPEAN PATENT SPECIFICATION**

(45) Date of publication and mention
of the grant of the patent:
**13.06.2018 Bulletin 2018/24**

(21) Application number: **08734051.9**

(22) Date of filing: **10.04.2008**

(51) Int Cl.:
***H04W 56/00*** *(2009.01)*

(86) International application number:
**PCT/CN2008/070693**

(87) International publication number:
**WO 2008/125052 (23.10.2008 Gazette 2008/43)**

(54) **WIRELESS COMMUNICATION SYSTEM, AIR INTERFACE SYNCHRONIZING METHOD, BASE STATION AND ITS CONTROLLING APPARATUS**

DRAHTLOSES KOMMUNIKATIONSSYSTEM, VERFAHREN ZUR SYNCHRONISIERUNG DER LUFTSCHNITTSTELLE, BASISSTATION UND ENTSPRECHENDE STEUERVORRICHTUNG

SYSTÈME DE COMMUNICATION SANS FIL, PROCÉDÉ DE SYNCHRONISATION D'UNE INTERFACE RADIO, STATION DE BASE ET SON APPAREIL DE COMMANDE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.04.2007 CN 200710098126**
**17.12.2007 CN 200710300245**

(43) Date of publication of application:
**30.09.2009 Bulletin 2009/40**

(73) Proprietor: **Huawei Technologies Co., Ltd.**
**Longgang District**
**Shenzhen, Guangdong 518129 (CN)**

(72) Inventors:
• **PENG, Xiang**
**Shenzhen**
**Guangdong 518129 (CN)**

• **REN, Yongzheng**
**Shenzhen**
**Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**EP-A1- 2 725 857     EP-A2- 0 626 769**
**WO-A1-98/49859      CN-A- 1 306 708**
**CN-A- 1 815 909      CN-A- 1 905 405**
**CN-A- 101 035 327    US-A- 5 440 561**

## Description

FIELD OF THE INVENTION

The present invention relates to radio communication, and in particular, to a radio communication system, an air interface synchronization method, a Base Station (BS), and a Base Station Controller (BSC).

BACKGROUND

An air interface in the communication field, also known as a radio interface, refers to the interface between a Mobile Station (MS) and an access network, and is generally composed of a physical layer, data link layer and a network layer. The physical layer is the lowest layer of the air interface, and supports transmission of bit streams on physical media. The physical layer is connected with the Medium Access Control (MAC) sublayer of the data link layer and the Radio Resource Control (RRC) sublayer of the network layer.

The air interfaces of different BSs in the radio network are generally not synchronous if no synchronization technology is applied. However, most technologies for enhancing the network capacity are based on a network with synchronized air interfaces. For example, in a network with synchronized air interfaces, the probability of frequency collision in the coverage area of each cell is controllable, and the technologies such as Dynamic Frequency and Channel Allocation (DFCA) are practicable. Therefore, the network capability may be increased by over 40% in the close multiplexing scenarios. Evidently, the air interface synchronization technology is essential to enhancing the network performance.

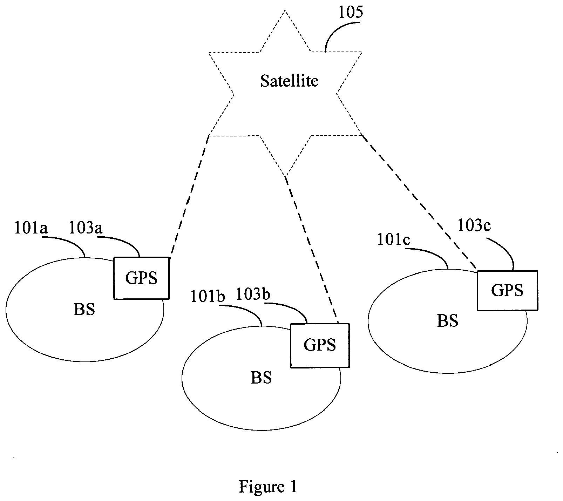

As shown in Figure 1, a method for synchronizing air interfaces in the prior art is based on the Global Positioning System (GPS) technology. The principles of the GPS are as follows: A GPS receiving synchronization apparatus 103 is installed on each BS 101 to synchronize the BS 101 to the same satellite 105, thus synchronizing the air interfaces of every two BSs and finally synchronizing the entire network. The GPS synchronization aims to correct the phase of the radio frame and enable all BSs in the system to have a unified frame phase. That is, all radio frames in the system have a unified starting point of synchronization. Such a GPS-based air interface synchronization technology is also known as a hard synchronization technology.

In the process of researches and practices, the inventor finds at least the following weaknesses in the air interface synchronization technology in the prior art:

(1) The construction cost is high. A GPS receiving synchronization apparatus needs to be installed for each BS in the synchronization system, thus leading to a long construction period and high costs.

(2) The maintenance cost is high. During operation, once a GPS receiving synchronization apparatus is faulty, for example, if the GPS receiving synchronization apparatus or its feeder cable or BS board is faulty, manual maintenance is required. Manual maintenance involves a high time cost, a high labor cost, and a high material cost, thus leading to high maintenance costs.

EP0626769A2 discloses a TDMA cellular communication network. In the network, one of the cell sites is a reference station for establishing a time reference in response to a timing signal from a mobile switching office, and each of the other cell sites is a subordinate station. Each subordinate station establishes a time slot in response to the timing signal from the mobile switching system and receives a signal from a mobile station located in the area of the reference station for detecting a time lapse between the time slot and the signal from the mobile station. A delay time is introduced to the time slot according to the time lapse so that the time slot is synchronized to the time reference of the reference station. Further, international application WO 98/49859 discloses the synchronization of two base stations towards the same mobile device during a soft handover procedure.

SUMMARY

The technical objective of the embodiments of the present invention is to provide a radio communication system and an air interface synchronization method for synchronizing air interfaces of a Base Station (BS) conveniently and cost-efficiently,

Another technical objective of the embodiments of the present invention is to provide a BS and a Base Station Controller (BSC) for synchronizing air interfaces of a BS conveniently and cost-efficiently.

In order to fulfill the foregoing technical objectives, an air interface synchronization method and the corresponding system are provided according to the independent claims. Preferred embodiments are defined in the dependent claims. More specifically, a radio communication system includes two BSs and a BSC. The two BSs are adapted to receive a same signal from the MS, record the signal receiving time, and report the signal receiving time to the BSC.

The MS may send the same signal to the two BSs.

The BSC is adapted to obtain the signal receiving time recorded by the two BSs, obtain the air interface offset between the two BSs according to the signal receiving time, and deliver the offset to one of the two BSs.

The two BSs are further adapted to synchronize the air interfaces of the two BSs according to the offset.

In order to fulfill the foregoing technical objectives, an air interface synchronization method is provided in another embodiment of the present invention. The method includes:

receiving, by the two BSs, the same signal from the MS that can send the same signal to two BSs;

recording time of receiving the signal, by the two BSs, and reporting the time to a BSC;

calculating, by the BSC, an air interface offset between the two BSs according to the signal receiving time reported by the the two BSs;

obtaining, by one of the two BSs, the air interface offset between the two BSs delivered by the BSC; and

synchronizing, by the BS which obtained the air interface offset, the air interfaces of the two BSs according to the air interface offset between the two BSs.

In order to fulfill the foregoing technical objectives, a BS is provided in another embodiment of the present invention. The BS includes:

a signal receiving unit, adapted to receive a signal from the MS;

a time recording unit, adapted to record the time of receiving the signal;

a time reporting unit, adapted to report the time recorded by the time recording unit to the BSC;

an offset obtaining unit, adapted to obtain from the BSC the offset between the air interface of the BS and the air interface of another BS, where the offset is delivered by the BSC and calculated according to the time reported by the time reporting unit and a time of receiving the same signal from the MS by the another BS; and

an offset unit, adapted to offset the air interfaces of the BS according to the offset.

In order to fulfill the foregoing technical objectives, a BSC is provided in another embodiment of the present invention. The BSC includes:

a time receiving unit, adapted to receive signal receiving time recorded by a first Base Station, BS, and a second BS, wherein the signal receiving time is time of receiving the same signal from a Mobile Station, MS;

an offset calculating unit, adapted to calculate an air interface offset between the first BS and the second BS according to the signal receiving time received by the time receiving unit; and

an offset delivering unit, adapted to deliver the air interface offset to the first BS or the second BS.

To sum up, in the embodiments of the present invention, the air interfaces of two BSs are synchronized through the existing hardware and the software installed on the existing hardware without requiring expensive synchronization equipment, thus reducing relevant maintenance cost. In the prior art, the air interfaces are synchronized through a GPS hard synchronization technology so that the construction cost and the maintenance cost are high. By contrast, the embodiments of the present invention use the existing radio network resources to synchronize the air interfaces of the BSs conveniently and cost-effectively.

BRIEF DESCRIPTION OF THE DRAWINGS

Figure 1 shows a GPS-based air interface synchronization system in the prior art;

Figure 2 is a flowchart of an air interface synchronization method according to an embodiment of the present invention;

Figure 3 shows a system for implementing entire-network synchronization using the method illustrated in Figure 2; and

Figure 4 shows a radio communication system according to an embodiment of the present invention.

DETAILED DESCRIPTION

In order to make the technical solution, objectives and merits of the present invention clearer, the embodiments of the present invention are described below in detail by reference to accompanying drawings.

The embodiments of the present invention take the Global System for Mobile Communications (GSM) standard as an example. The scenarios of other standards such as Code Division Multiple Access (CDMA), Wideband Code Division Multiple Access (WCDMA), and Time Division Code Division Multiple Access (TD-CDMA) may be obtained by analogy. For ease of description, the following embodiment takes th e BSC and th e BS in the GSM as examples. In other embodiments, the BSC may be a Radio Network Controller (RNC) and the BS may be a Node B in the WCDMA. Likewise, the specifically named entities, devices, apparatuses, and units herein may be replaced by other entities, devices, apparatuses, and units of the same or similar functions.

In an embodiment of the present invention, in order to synchronize the air interface of one BS (such as BS1) and the air interface of another BS (such as BS2), the air interface of BS1 may be synchronized with the air interface of BS2 by using the MS in the coverage area of the two BSs as a bridge. For example, an MS is selected first, which can send the same signal to BS1 and BS2; after receiving the signal, BS1 and BS2 report the time of receiving the signal to the BSC; according to the reported time, the BSC obtains the offset between the air interface of BS1 and the air interface of BS2; according to the offset, the air interface of BS1 and the air interface of BS2 can be synchronized.

In another embodiment of the present invention, the air interface of one BS is synchronized with the air interface of another BS, whereby the air interfaces of multiple BSs are synchronized throughout the network.

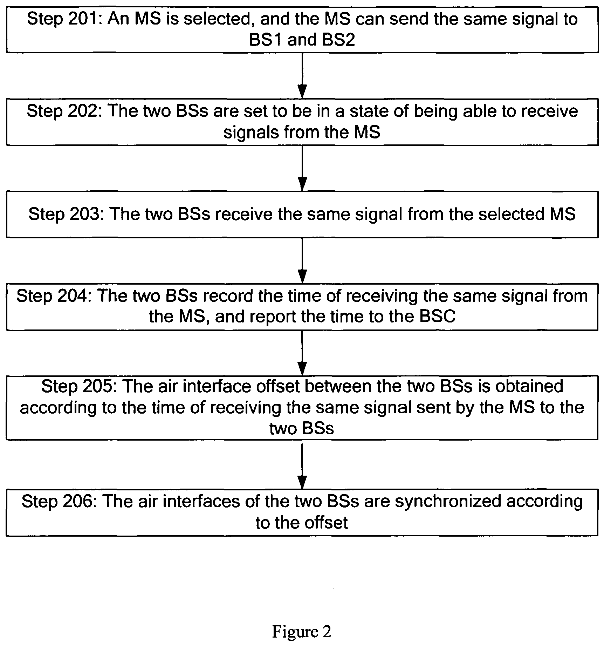

As shown in Figure 2, the air interface synchronization method provided in an embodiment of the present invention includes the following steps:

Step 201: An MS is selected, and the MS can send the same signal to BS1 and BS2.

The MS may be selected in this way: The BSC performs measurement decision for the calls in Cell_1 (a cell covered by BS1) and Cell_2 (a cell covered by BS2), and receives a measurement report that carries the downlink signal strength of Cell_1 and Cell_2. If the downlink signal strength difference of a call between Cell_1 and Cell_2 is not greater than a preset threshold, this case is recorded. If the downlink signal strength difference of a call in P of N continuous decisions meets a preset requirement, for example, if the downlink signal strength difference of a call in 5 of 10 continuous decisions meets a preset requirement, the MS corresponding to the call may be selected. Here N represents "count of measuring signal strength difference", P represents "count of continuous signal strength difference", and N and P are integers greater than zero.

The selected MS that can send the same signal to BS1 and BS2 may be located in a cell of BS1 or a cell of BS2, or located near the physical midpoint of the two BSs, or located in the overlap area of the signal coverage areas of the two BSs.

Step 202: The two BSs are set to be in a state of being able to receive signals from the MS.

In this step, an internal command may be transmitted beforehand so that the two BSs are set to be in a state of being able to receive signals from the MS. Specifically, the BSC transmits an internal command beforehand so that the carrier T1 of BS1 and carrier T2 of BS2 have the same frequency and color code. For example, the carrier T2 of BS2 is adapted to monitor the carrier T1 of BS1 and enable BS2 to be in the Access Burst (AB) demodulation signal state. In this way, both BSs can receive the same signal from the MS. Alternatively, the carrier T1 of BS1 is adapted to monitor the carrier T2 of BS2 and enable BS1 to be in the AB demodulation signal state. The following description supposes that the monitored BS is BS1.

Step 203: The two BSs receive the same signal from the selected MS.

In this step, the BSC may deliver a signaling to trigger the MS to send a signal. For example, the BSC delivers a signaling to the monitored BS1. Through BS1, the BSC triggers the MS to send a signal. The signaling delivered by the BSC may be a handover command.

After receiving the signaling (such as handover command) delivered by the BSC, the MS sends a signal (such as AB access signal), and the monitored BS1 can receive the signal. In step 202, the two BSs are set to be in a state of being able to receive signals from the MS. Therefore, BS2 can receive the signal from the MS.

Step 204: The two BSs record the time of receiving the same signal from the MS, and report the time of receiving the same signal to the BSC.

For example, the two BSs receive the AB access signal and record the time of receiving the AB access signal. The BSs may record the time of receiving the signal at the air interface, where the signal receiving time is represented by the frame number of the radio frame and the bit offset or represented by the frame number of the radio frame, the bit offset, and the Time Advance (TA). Afterward, the time of the two BSs receiving the signal is reported to the BSC.

Step 205: The air interface offset between the two BSs is obtained according to the time of receiving the same signal sent by the MS to the two BSs.

The offset may be represented by the frame number (fn) of the radio frame and the bit offset or represented by the frame number of the radio frame, the bit offset, and the TA.

The offset may also be calculated according to the parameters, and represented by the calculation result. For example, the BSC receives the AB access signal receiving time recorded by the two BSs, and then obtains the air interface offset between the two BSs through a filtering algorithm.

For example, if "fn" represents the frame number of the radio frame and "bit" represents the bit offset, the time of receiving the signal at the BS may be represented by $(fn\_x, bit\_x)$. If the signal receiving time at BS1 is $(fn\_1, bit\_1)$ and the signal receiving time at BS2 is $(fn\_2, bit\_2)$, the method of calculating the offset may be: The difference between the frame number recorded by one BS and the frame number recorded by the other BS $(fn\_1-fn\_2)$ is multiplied with 1250 to obtain a product, and the bit offset recorded by the two BSs (bit_1 - bit_2) is added to the product to obtain the offset, namely:

$$\text{Offset} = (\text{fn\_1} - \text{fn\_2}) \times 1250 + (\text{bit\_1} - \text{bit\_2}).$$

In other embodiments, the offset may be adjusted through a TA parameter to improve the precision. Supposing that the TA between the MS and BS1 is ta_1 and the TA between the MS and BS2 is ta_2 (the two TAs may be obtained from the existing interface messages such as the measurement report), the offset may be calculated through the following formula:

$$\text{Offset} = (\text{fn\_1} - \text{fn\_2}) \times 1250 + (\text{bit\_1} - \text{bit\_2}) + (\text{ta\_1} - \text{ta\_2})/2.$$

In other embodiments, the of fset ma y b e calc ulated b y re ference to the dif ference between two distances, namely, the distance from the MS to one BS, and the distance from the MS to the other BS.

Step 206: The air interfaces of the two BSs are synchronized according to the offset.

The BSC delivers the calculated offset to BS2, and BS2 adjusts the occasion of frame interruption according to the offset, and aligns the air interface of BS2 with the air interface of BS1. Alternatively, the BSC delivers the calculated offset to BS1, and BS1 adjusts the occasion of frame interruption according to the offset, and aligns the air interface of BS1 with the air interface of BS2.

In other embodiments, the MSC may send the offset represented by the parameters "fn" and "bit" or parameters "fn", "bit", and "ta" to each BS. According to the "fn", the BS changes the frame number directly to synchronize the frame numbers. According to the "sn", the BS changes the timeslot number of the transceiver (TRX) by shielding timeslot interruption so as to implement timeslot synchronization. Or further, the BS implements synchronization through fine tuning of the timeslot interruption occasion (controlling the bit count) according to the "ta".

Described above is a method of synchronizing the air interfaces of two BSs according to an embodiment of the present invention.

In other embodiments, the air interfaces of two BSs may further be synchronized through the following technologies:

A. Before the air interface offset between two BSs is obtained, these operations may be performed repeatedly: The same signal is sent to at least two BSs, the time of receiving the same signal is recorded, and multiple time records are obtained and processed, for example, filtered or averaged; and/or

B. Multiple offsets of air interfaces of the two BSs are obtained and processed, for example, filtered or averaged.

The specific implementation of the foregoing solutions A and B may be as follows: In step 203, the BSC delivers a signaling which requires the MS to hand over into a target channel of the monitored BS1, the monitored BS1 delays delivering the response message of the handover action to the MS, and consequently, the MS continues sending the same signal repeatedly (namely, sending multiple signals) so that BS1 and BS2 receive multiple signals. In this way, multiple time records are obtained. The multiple time records may be processed, for example, filtered or averaged, to obtain the offset of the air interfaces.

Alternatively, an offset is obtained according to one time record, multiple air interface offsets are obtained according to multiple time records, and then filtered or averaged to obtain a final offset. For example, if BS1 and BS2 report several pairs of receiving time, several offsets are calculated and averaged after removing the maximum offset and the minimum offset, and the average offset is the offset finally calculated. Alternatively, the final offset is the offset value which appears most frequently (for example, if 10 offset values are obtained, 5 of the 10 values are 3230, 2 of the 10 values are 3231, 1 of the 10 values is 3233, 1 of the 10 values is 3229, and 1 of the 10 values is 3228, then 3230 is the final offset).

If multiple recorded time values or offsets are averaged or filtered, the final offset is more precise, and the effect of synchronizing the air interfaces is better.

In other embodiments, the operation of collecting the air interface offset of the BSs may be separated from the operation of adjusting the air interface synchronization of the BSs. For example, the air interface offset of the two BSs may be obtained in certain periods of the daytime during which the communication system is not busy, the air interface synchronization of the two BSs and the air interface synchronization of all BSs throughout the network may be adjusted at night when the communication system is the idlest, and fine tuning may be performed at intervals. In this way, the impact on the normal communication services is minimized.

In other embodiments, multiple MSs may be selected, and the foregoing steps 202-205 are repeated to obtain multiple air interface offsets, which are then filtered or averaged. The result of filtering or averaging is the air interface offset of the BS to be adjusted, and is delivered to the BS.

In the foregoing embodiments, the air interface synchronization is performed between two BSs. In other embodiments, the air interface synchronization may be performed between more than two BSs such as three or four BSs. For example, for synchronization between three BSs, an MS in the coverage area of the three BSs may be selected. One of the BSs is used as a central BS, and the air interface offsets between the central BS and the other two BSs are obtained and delivered to the other two BSs. Afterward, the air interfaces of the two BSs are adjusted to synchronize them with the central BS. In this way, the air interfaces of the three BSs are synchronized.

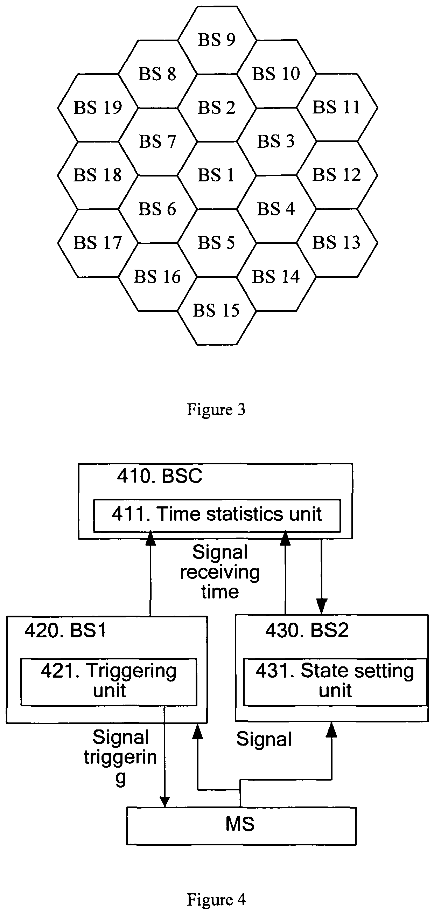

After the air interfaces of two BSs are synchronized in the foregoing embodiment, the air interfaces of other BSs may be further synchronized until the air interfaces of all BSs under the BSC are synchronized, as shown in Figure 3.

The procedure of synchronizing air interfaces of all BSs throughout a network further includes the following steps in addition to the steps of synchronizing the air interfaces of two BSs in the foregoing embodiment.

Step 207: Either of the two BSs mentioned above is used as a central BS, and the air interfaces of the BSs around the central BS are synchronized.

If the air interface of any BS around the central BS has already been synchronized, such a BS does not need to be synchronized any more. For example, BS1 is used as a central BS, and the air interfaces of the BSs around BS1 are synchronized according to steps 201-206 except the BSs already synchronized (such as BS2). The BSs around BS1 (namely, surrounding BSs) refer to the BSs whose coverage areas are directly adjacent to the coverage area of BS1. As shown in Figure 3, supposing that BSx is a BS numbered x, then the first BS is BS1, and the BSs around BS1 are BS2, BS3, BS4, BS5, BS6, and BS7.

Step 208: A synchronized BS among the surrounding BSs is used as a central BS, and the air interfaces of the BSs around the central BS are synchronized.

If the air interface of any BS around the central BS has already been synchronized, such a BS does not need to be synchronized any more. For example, a synchronized BS (such as BS2) among the surrounding BSs is used as a central BS, and the unsynchronized BSs (such as BS8, BS9, and BS10) around the central BS (such as BS2) are synchronized according to steps 201-206 described above.

The foregoing operation is iterated until the BSs throughout the network are synchronized.

To sum up, in the embodiments of the present invention, the air interfaces of two BSs and all BSs throughout the network are synchronized through the existing hardware and the software installed on the existing hardware without requiring expensive synchronization equipment, thus reducing relevant maintenance. In the prior art, the air interfaces are synchronized through a GPS hard synchronization technology so that the construction cost and the maintenance cost are high. By contrast, the embodiments of the present invention use the existing radio network resources to synchronize the air interfaces of the BSs conveniently and cost-effectively.

It is understandable to those skilled in the art that all or partial steps of the foregoing embodiments may be implemented by hardware instructed by a program. The program may be stored in a computer-readable storage medium. Once being executed, the program includes the following steps: Two BSs receive the same signal sent by an MS in the coverage area of the two BSs; the MS sends the same signal to the two BSs; the two BSs record the time of receiving the same signal; an air interface offset between the two BSs is obtained according to the time of receiving the signal at the two BSs; and the air interfaces of the two BSs are adjusted and synchronized according to the offset. The storage medium mentioned above may be a ROM/RAM, magnetic disk, compact disk, and so on.

As shown in Figure 4, a radio communication system in an embodiment of the present invention includes a BSC 410 and two BSs 420 and 430 under it.

The first BS 420 includes a triggering unit 421, and the second BS 430 includes a state setting unit 431. The BSC 410 includes a time statistics unit 411.

The two BSs 420 and 430 are adapted to: receive the same signal sent by the MS, record the time of receiving the signal, and report the signal receiving time to the BSC. The MS can send the same signal to the two BSs 420 and 430.

The triggering unit 421 is adapted to deliver a signaling to trigger the MS to send the same signal. The signal may be an AB access signal. The state setting unit 431 is adapted to set the second BS 430 to be in a state of being able to receive the AB access signal.

The BSC 410 is adapted to: obtain the signal receiving time recorded by the two BSs 420 and 430, obtain the air interface offset between the two BSs 420 and 430 according to the signal receiving time, and deliver the offset to the second BS 430. The time statistics unit 411 is adapted to: obtain multiple time records, and average or filter the multiple time records for the purpose of obtaining the offset.

The second BS 430 adjusts its air interface according to the offset so as to be synchronized with the first BS 420.

The second BS 430 may also include the triggering unit 421. The first BS 420 may also include the state setting unit 431.

In another embodiment, the time statistics unit may be changed to an offset statistics unit, adapted to obtain multiple offsets and av erage the offsets out. Alternatively, the time statistics unit and the offset statistics unit are applied concurrently.

In another embodiment, the BSC 410 may deliver the offset to the first BS 420. The first BS 420 adjusts its air interface according to the offset so as to be synchronized with the second BS 430.

In an embodiment, the BSC 410 may further include an MS selecting unit, adapted to: monitor the downlink signal strength difference of a call between of the cell of one BS and the cell of the other BS among the two BSs. If the downlink signal strength difference of a call in P of N continuous decisions meets a preset requirement, the MS corresponding to the call is selected. Here N represents "count of measuring signal strength difference", P represents "count of continuous signal strength difference", and N and P are integers greater than zero.

The BS in an embodiment of the present invention includes a signal receiving unit, adapted to receive the same signal sent by the MS. The MS capable of sending the same signal to BS1 and BS2 may be located in a cell of BS1 or a cell of BS2, or located near the physical midpoint of the two BSs, or located in the overlap of the signal coverage areas of the two BSs.

The BS may further include:

a time recording unit, adapted to record the time of receiving the signal;
a time reporting unit, adapted to report the time recorded by the time recording unit to the BSC;
an offset obtaining unit, adapted to obtain the air interface offset between the BS and the another BS, wh ere the air interface offset is calculated b y the BSC according to the time recorded by the time recording unit; and
an offset unit, adapted to offset the air interfaces of the BS according to the air interface offset.

The BS may further include:
a state setting unit, adapted to set the BSs to be in a state of being able to receive signals from the MS.

The BS may further include a triggering unit, adapted to deliver a signaling to trigger the MS to send the same signal.

The BSC provided in an embodiment of the present invention includes:

a time receiving unit, adapted to receive the time of receiving the same signal sent by the MS, where the signal receiving time is recorded by the first BS and the second BS and the MS may send the same signal to the first BS and the second BS, wherein: the MS that can send the same signal to BS1 and BS2 may be located in a cell of BS1 or a cell of BS2, or located near the physical midpoint of the two BSs, or located in the overlap of the signal coverage areas of the two BSs;
an offset calculating unit, adapted to calculate the air interface offset between the first BS and the second BS according to the signal receiving time received by the time receiving unit; and
an offset delivering unit, adapted to deliver the air interface offset to the first BS or the second BS.

The BSC may further include a triggering unit, adapted to deliver a signaling through the first BS or the second BS to trigger the MS to send the same signal.

The BSC may further include:

a time statistics unit, adapted to: average or filter multiple time records received from the first BS and the second BS respectively, and input the time records averaged or filtered into the offset calculating unit; and/or
an offset statistics unit, adapted to average or filter multiple offsets received from the offset calculating unit, and input the offsets averaged or filtered into the offset delivering unit.

To sum up, in the embodiments of the present invention, the air interfaces of two BSs are synchronized through the existing hardware and the software installed on the existing hardware without requiring expensive synchronization equipment, thus reducing relevant maintenance. In the prior art, the air interfaces are synchronized through a GPS hard synchronization technology so that the construction cost and the maintenance cost are high. By contrast, the embodiments of the present invention use the existing radio network resources to synchronize the air interfaces of the BSs conveniently and cost-effectively.

It should be noted that all units of the BS and the BSC in the embodiments of the present invention may be integrated into one processing module, or exist independently, or two or more of such units are integrated into one module. The integrated module may be in the form of hardware or a software function module. The integrated module may be sold or applied as an independent product, or stored in a computer-readable storage media.

Detailed above are a radio communication system, an air interface synchronization method, a BS, and a BSC provided in embodiments of the present invention. Although the invention is described through some exemplary embodiments, the invention is not limited to such embodiments. It is apparent that those skilled in the art can make various modifications and variations to the invention without departing from the scope of the invention.

**Claims**

1. An air interface synchronization method, comprising:

   selecting a Mobile Station, MS, capable of sending the same signal to two Base Stations, BSs;
   receiving, by two Base Stations, BSs, a same signal from the MS; recording time of receiving the signal, by the two BSs, and reporting the signal receiving time to a Base Station Controller, BSC;
   calculating, by the BSC, an air interface offset between the two BSs according to the signal receiving time reported by the two BSs;
   obtaining, by one of the two BSs, the air interface offset between the two BSs delivered by the BSC; and
   synchronizing, by the BS which obtained the air interface offset, air interfaces of the two BSs according to the air interface offset between the two BSs.

2. The air interface synchronization method of claim 1, further comprising:
   using either of the two BSs as a central BS, and synchronizing the air interfaces of the BSs around the central BS.

3. The air interface synchronization method of claim 1, further comprising: selecting the MS capable of sending the same signal to the two Base Stations, BSs, wherein the selecting the MS comprises:

   monitoring downlink signal strength difference of a call between a cell of one BS of the two BSs and a cell of the other BS; and
   selecting the MS corresponding to a call if the downlink signal strength difference of the call in P of N continuous decisions meets a preset requirement, wherein N represents "count of measuring signal strength difference", P represents "count of continuous signal strength difference", and N and P are integers greater than zero.

4. The air interface synchronization method of claim 1, wherein the synchronizing the air interfaces of the two BSs comprises:
   adjusting, an occasion of frame interruption according to the air interface offset, and aligning the air interface of one BS with the air interface of the other BS.

5. The air interface synchronization method according to any one of claims 1-4, further comprising:

   setting the two BSs to be in a state of being able to receive signals from the MS; and
   delivering a signaling to trigger the MS to send the same signal.

6. The air interface synchronization method according to any one of claims 1-4, wherein before the air interface offset between the two BSs is obtained, the method further comprises:

   recording the signal receiving time of the same signal sent repeatedly, and obtaining multiple time records; and/or
   obtaining the air interface offset between the two BSs repeatedly to obtain multiple air interface offsets.

7. The air interface synchronization method according to any one of claims 1-4, wherein the BSC is a Radio Network Controller, RNC, and the BS is Node B in scenarios of Wideband Code Division Multiple Access standard.

8. A radio communication system, comprising:

   a Base Station Controller, BSC, adapted to select a Mobile Station, MS, the MS adapted to send the same signal to two Base Stations, BSs; the two Base Stations, BS, adapted to: receive the same signal from the MS, record time of receiving the signal, and report the signal receiving time to the Base Station Controller, BSC; and the BSC adapted to calculate an air interface offset between the two BSs according to the signal receiving time reported by the two BSs;
   wherein one of the two BSs is further adapted to: obtain the air interface offset between the two BSs delivered by the BSC, and synchronize air interfaces of the two BSs according to the air interface offset between the at least two BSs.

**Patentansprüche**

1. Luftschnittstellensynchronisierungsverfahren, umfassend:

   Auswählen einer Mobilstation, MS, fähig zum Senden des gleichen Signals zu zwei Basisstationen, BS;
   Empfangen durch zwei Basisstationen, BS, eines gleichen Signals von der MS;
   Aufzeichnen der Zeit des Empfangs des Signals durch die zwei BS und Melden der Signalempfangszeit an eine Basisstationssteuerung, BSC (Base Station Controller);
   Berechnen durch die BSC eines Luftschnittstellenversatzes zwischen den zwei BS gemäß der durch die zwei BS gemeldeten Signalempfangszeit;
   Erhalten durch eine der zwei BS des Luftschnittstellenversatzes zwischen den zwei BS abgegeben durch die BSC und
   Synchronisieren durch die BS, die den Luftschnittstellenversatz erhielt, von Luftschnittstelle der zwei BS gemäß dem Luftschnittstellenversatz zwischen den zwei BS.

2. Luftschnittstellensynchronisierungsverfahren nach Anspruch 1, weiterhin umfassend:
   Verwenden einer der zwei BS als eine zentrale BS und Synchronisieren der Luftschnittstellen der BS um die zentrale BS.

3. Luftschnittstellensynchronisierungsverfahren nach Anspruch 1, weiterhin umfassend: Auswählen der MS fähig zum Senden des gleichen Signals zu den zwei Basisstationen, BS, wobei das Auswählen der MS umfasst:

   Überwachen von Abwärtssignalstärkendifferenz eines Rufs zwischen einer Zelle einer BS der zwei BS und einer Zelle der anderen BS; und
   Auswählen der MS entsprechend einem Ruf, wenn die Abwärtssignalstärkendifferenz des Rufs in P von N Dauerentscheidungen einem vorbestimmten Erfordernis entspricht, wobei N "Zählung von Messsignalstärkendifferenz" darstellt, P "Zählung von Dauersignalstärkendifferenz" darstellt und N und P Ganzzahlen größer als null sind.

4. Luftschnittstellensynchronisierungsverfahren nach Anspruch 1, wobei das Synchronisieren der Luftschnittstellen der zwei BS umfasst:
   Einstellen eines Rahmenunterbrechungsereignisses gemäß dem Luftschnittstellenversatz und Ausrichten der Luftschnittstelle einer BS auf die Luftschnittstelle der anderen BS.

5. Luftschnittstellensynchronisierungsverfahren nach einem beliebigen der Ansprüche 1 bis 4, weiterhin umfassend: Einstellen der zwei BS in einen Zustand, in der Lage zu sein, Signale von der MS zu empfangen, und Abgeben einer Signalisierung zum Auslösen der MS, das gleiche Signal zu senden.

6. Luftschnittstellensynchronisierungsverfahren nach einem beliebigen der Ansprüche 1 bis 4, wobei, ehe der Luftschnittstellenversatz zwischen den zwei BS erhalten wird, das Verfahren weiterhin umfasst: Aufzeichnen der Signalempfangszeit des gleichen, wiederholt gesendeten Signals und Erhalten mehrerer Zeitaufzeichnungen; und/oder wiederholtes Erhalten des Luftschnittstellenversatzes zwischen den zwei BS zum Erhalten mehrerer Luftschnittstellenversätze.

7. Luftschnittstellensynchronisierungsverfahren nach einem beliebigen der Ansprüche 1 bis 4, wobei die BSC eine Funknetzsteuerung, RNC (Radio Network Controller), ist und die BS Knoten B in Szenarios des WCDMA(Wideband Code Division Multiple Access - Breitband-Vielfachzugriff im Codemultiplex)-Standards ist.

8. Funkkommunikationssystem, umfassend:

   eine Basisstationssteuerung, BSC (Base Station Controller), eingerichtet zum Auswählen einer Mobilstation, MS, wobei die MS eingerichtet ist zum Senden des gleichen Signals zu zwei Basisstationen, BS; wobei die zwei Basisstationen, BS, eingerichtet sind zum: Empfangen des gleichen Signals von der MS, Aufzeichnen der Zeit des Empfangs des Signals und Melden der Signalempfangszeit an die Basisstationssteuerung, BSC; und wobei die BSC eingerichtet ist zum Berechnen eines Luftschnittstellenversatzes zwischen den zwei BS gemäß der durch die zwei BS gemeldeten Signalempfangszeit;
   wobei eine der zwei BS weiterhin eingerichtet ist zum: Erhalten des Luftschnittstellenversatzes zwischen den zwei BS abgegeben durch die BSC und Synchronisieren von Luftschnittstellen der zwei BS gemäß dem Luftschnittstellenversatz zwischen den wenigstens zwei BS.

**Revendications**

1.  Procédé de synchronisation d'interfaces radio, comprenant de :

    sélectionner une station mobile, MS, capable d'envoyer le même signal à deux stations de base, BS ;
    recevoir, par deux stations de base, BS, un même signal à partir de la MS ;
    enregistrer l'heure de réception du signal, par les deux BS, et rapporter l'heure de réception du signal à un contrôleur de station de base, BSC ;
    calculer, par le BSC, un décalage d'interfaces radio entre les deux BS en fonction de l'heure de réception du signal rapportée par les deux BS ;
    obtenir, par l'une des deux BS, le décalage d'interfaces radio entre les deux BS délivré par le BSC ; et
    synchroniser, par la BS qui a obtenu le décalage d'interfaces radio, des interfaces radio des deux BS en fonction du décalage d'interfaces radio entre les deux BS.

2.  Procédé de synchronisation d'interfaces radio de la revendication 1, comprenant en outre de :
    utiliser l'une des deux BS en tant que BS centrale, et synchroniser les interfaces radio des BS autour de la BS centrale.

3.  Procédé de synchronisation d'interfaces radio selon la revendication 1, comprenant en outre de : sélectionner la MS capable d'envoyer le même signal aux deux stations de base, BS, dans lequel la sélection de la MS comprend de :

    surveiller une différence de force de signal de liaison descendante d'un appel entre une cellule d'une BS des deux BS et une cellule de l'autre BS ; et
    sélectionner la MS correspondant à un appel si la différence de force du signal de liaison descendante de l'appel dans P de N décisions continues répond à une exigence prédéfinie, où N représente le "compte de différence de force de signal de mesure", P représente le "compte de différence de force de signal continu", et N et P sont des entiers supérieurs à zéro.

4.  Procédé de synchronisation d'interfaces radio selon la revendication 1, dans lequel la synchronisation des interfaces radio des deux BS comprend de :

    régler une occasion d'interruption de trame en fonction du décalage d'interfaces radio,
    et aligner l'interface radio d'une BS avec l'interface radio de l'autre BS.

5.  Procédé de synchronisation d'interfaces radio selon l'une quelconque des revendications 1 à 4, comprenant en outre de :

    régler les deux BS dans un état permettant de recevoir des signaux de la MS ; et
    délivrer une signalisation pour déclencher la MS pour envoyer le même signal.

6.  Procédé de synchronisation d'interfaces radio selon l'une quelconque des revendications 1 à 4, dans lequel, avant que le décalage d'interfaces radio entre les deux BS ne soit obtenu, le procédé comprend en outre de :

    enregistrer l'heure de réception du signal du même signal envoyé de façon répétée, et
    obtenir de multiples enregistrements d'heures ; et/ou
    obtenir le décalage d'interfaces radio entre les deux BS de façon répétée pour obtenir de multiples décalages d'interfaces radio.

7.  Procédé de synchronisation d'interfaces radio selon l'une quelconque des revendications 1 à 4, dans lequel le BSC est un contrôleur de réseau radio, RNC, et la BS est un noeud B dans des scénarios de norme d'accès multiple par répartition en code à large bande.

8.  Système de communication radio, comprenant :

    un contrôleur de station de base, BSC, conçu pour sélectionner une station mobile, MS, la MS étant conçue pour envoyer le même signal à deux stations de base, BS ;

les deux stations de base, BS, étant conçues pour : recevoir le même signal à partir de la MS, enregistrer l'heure de réception du signal, et rapporter l'heure de réception du signal au contrôleur de station de base, BSC ; et le BSC est conçu pour calculer un décalage d'interfaces radio entre les deux BS en fonction de l'heure de réception du signal rapportée par les deux BS ;

dans lequel l'une des deux BS est en outre conçue pour : obtenir le décalage d'interfaces radio entre les deux BS délivré par le BSC, et synchroniser les interfaces radio des deux BS en fonction du décalage d'interfaces radio entre les au moins deux BS.

Figure 1

Step 201: An MS is selected, and the MS can send the same signal to BS1 and BS2

Step 202: The two BSs are set to be in a state of being able to receive signals from the MS

Step 203: The two BSs receive the same signal from the selected MS

Step 204: The two BSs record the time of receiving the same signal from the MS, and report the time to the BSC

Step 205: The air interface offset between the two BSs is obtained according to the time of receiving the same signal sent by the MS to the two BSs

Step 206: The air interfaces of the two BSs are synchronized according to the offset

Figure 2

Figure 3

Figure 4

**EP 2 106 157 B1**

## REFERENCES CITED IN THE DESCRIPTION

**Patent documents cited in the description**

- EP 0626769 A2
- WO 9849859 A